# EUROPEAN PATENT SPECIFICATION

(11) **EP 0 351 938 B1**
(45) Date of publication and mention of the grant of the patent: **20.04.1994**
(21) Application number: 89304901.5
(22) Date of filing: 16.05.1989
(51) Int. Cl.: F28D 1/053, F28F 21/08, F28F 9/02, B23K 1/00

(54) **An aluminum heat exchanger**
Aluminium-Wärmeaustauscher
Echangeur de chaleur en aluminium

(30) Priority: 14.07.1988 JP 93173/88 U
(43) Date of publication of application: 24.01.1990
(73) Proprietor: SHOWA ALUMINUM KABUSHIKI KAISHA, Sakaishi Osaka (JP)
(72) Inventor: Kobayashi, Hideyuki, Sakaishi Osaka (JP); Nobusue, Mitsuru, Sakaishi Osaka (JP); Kodachi, Noboru, Sakaishi Osaka (JP); Motohashi, Tutomu, Sakaishi Osaka (JP); Sasaki, Hironaka, Sakaishi Osaka (JP); Hoshino, Ryoichi, Sakaishi Osaka (JP)
(74) Representative: Kerr, Simonne June

(56) References cited:
- EP-A- 0 237 164
- EP-A- 0 255 313
- WO-A-84/01208
- DE-A- 2 408 680
- FR-A- 1 145 296
- FR-A- 1 247 748
- FR-A- 2 483 825
- GB-A- 9 941
- GB-A- 2 079 981
- US-A- 1 930 191
- US-A- 2 787 827
- PATENT ABSTRACTS OF JAPAN, vol. 12, no. 428 (M-762)(3275), November 11, 1988 & JP-A-63 161 394 (SHOWA ALUM. CORP.) 05-07-1988

## Description

The present invention relates to a method of manufacturing an aluminum condenser according to the features of the preamble of claim 1. Such a method is known, for example, from EP-A-0 255 313.

In this specification the term "aluminum" includes aluminum alloy. The percentage is represented by weight unless specified to the contrary.

It is known in the art to construct a heat exchanger with a core, headers, and tanks connected to the headers, the core including flat tubes stacked one above another, and fins sandwiched between the tubes.

In constructing such heat exchangers, there are many joints between the tubes and the headers, and between the headers and the tanks. The liquidtight joints are essential for heat exchangers containing a liquid. The common practice is soldering or brazing. Brazing is carried out in various manners; for example, at a low temperature by use of a torch. This method consumes time and requires high skill. Particularly when a flux is used to effect strong joint, an extra step is required to remove the flux. Alternatively, the mass brazing method is carried out at vacuum by use of a ring-shaped brazing substance placed in the provisional joints between the headers and the tubes. This method also consumes time; first, it takes time to assemble the headers and the tubes provisionally. Second, the placing of a brazing substance is time-and-labor-consuming. After all, these known methods consume time and labor, and is not efficient methods.

EP-A-0255313 discloses a condenser having two header pipes each having a transverse partition therein longitudinally offset relative to each other, side portions of each header pipe being seam welded to each other and the partitions being soldered to the pipes.

FR-A-1247748 discloses a radiator having longitudinally extending side portions abutment brazed to each other and end caps likewise brazed thereto.

It is an object of the present invention to provide a method for a condenser having minimum joints between the headers, the tubes and other components to save time and labor and capable of easy and ready fabrication.

According to the present invention a method of manufacturing an aluminum condenser for use in air-conditioners comprises assembling a plurality of flat aluminum tubes parallel to each other, a plurality of aluminum fin members interspersed between each two adjacent aluminum tubes, a pair of aluminum headers to which each tube is to be fluid-tightly connected at both ends, is characterized in that each header is formed into the shape of a pipe from a brazing sheet composed of a core sheet and a brazing agent layer coated on at least the outer surface of the core sheet and having side portions extending longitudinally and being abutment-bondable to each other and aluminum caps having upright wall portions are disposed in close contact with the outer surface of each header pipe on the ends thereof and, when fully assembled, the components are simultaneously brazed together to form the condenser.

The invention will now be described further, by way of example, with reference to the accompanying drawings, in which:-
Fig. 1 is an exploded perspective view of a condenser according to the present invention;
Fig. 2 is a front view showing the condenser;
Fig. 3 is a plan view of the condenser;
Fig. 4 is is a cross-sectional view on an enlarged scale taken along the line IV-IV of Fig. 2;
Fig. 5 is a cross-sectional view on an enlarged scale taken along the line V-V of Fig. 2;
Fig. 6 is a cross-sectional view on an enlarged scale showing the joint between two headers;
Fig. 7 is a cross-sectional view on an enlarged scale showing a deformation occurring between the jointed headers;
Fig. 8 is an exploded perspective view of a header and a lid;
Fig. 9 is a partly cross-sectional front view showing the header and the lid jointed together;
Fig. 10 is a perspective view showing a brazing sheet;
Fig. 11 is is a cross-sectional view on an enlarged scale taken along the line XI-XI of Fig. 10;
Fig. 12 is a perspective view showing the brazing sheet of Fig. 10 which is provided with slits at opposite sides for insertion of partitions;
Fig. 13 is a cross-sectional view on an enlarged scale showing the brazing sheet of Fig. 12 whose ends become slanted;
Fig. 14 is a perspective view on an enlarged scale showing the brazing sheet of Fig. 13 having a bulged portion;
Fig. 15 is a perspective view on an enlarged scale showing the brazing sheet of Fig. 14 whose bulged portion has slits for insertion of the tubes;
Fig. 16 is a side view on an enlarged scale showing chamfered edges of the slits shown in Fig. 15;
Fig. 17 is a perspective view showing the brazing sheet of Fig. 15 which is bent in U-shape;
Fig. 18 is a cross-sectional view on an enlarged scale showing a modified example of the brazing sheet, particularly its end portions brought into abutment;
Fig. 19 is a cross-sectional view showing the brazing sheet of Fig. 18;
Fig. 20 is a perspective view showing a modified example of the header; and
Fig. 21 is a cross-sectional plan view on an enlarged scale showing another modified example of the brazing sheet, particularly its end portions brought into abutment.

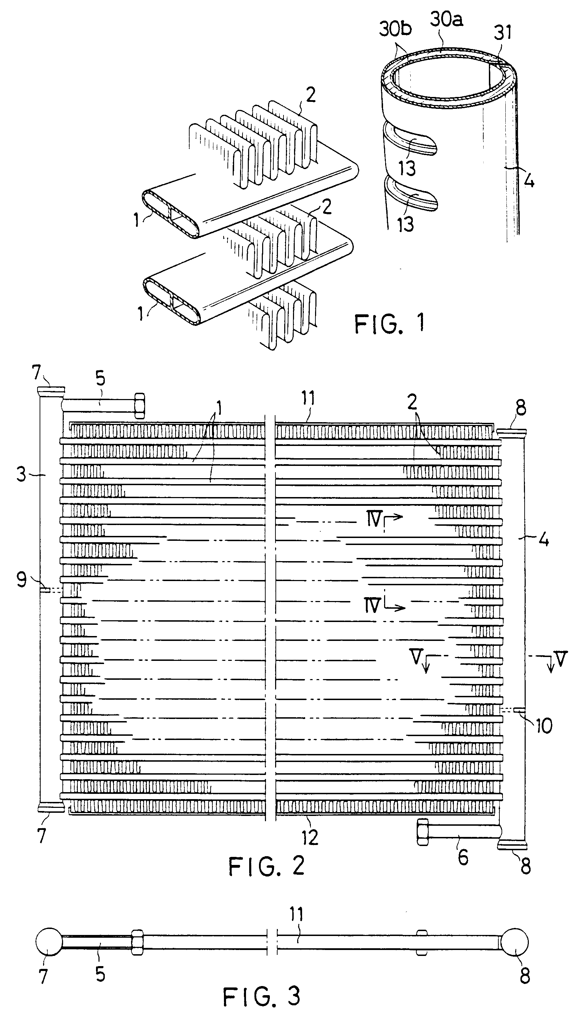

Referring to Figs. 1 to 5, the condenser has a plurality of flat tubes 1 stacked one above another, corrugated fins 2 sandwiched between the tubes 1, and headers 3, 4 connected to each end of the tubes 1 such that cooling medium paths are formed in zigzag patterns through the headers 3, 4 and the tubes 1.

The tubes 1 are made of aluminum extrusion. Alternatively they can be made of multi-bored pipes, commonly called harmonica type tubes. The bores provide coolant medium paths. Or else, they can be made of seam welded pipes. The corrugated fins 2 are as wide as the tubes 1 and brazed thereto. The corrugated fins are also made of aluminum, and preferably provided with louvers on their surfaces.

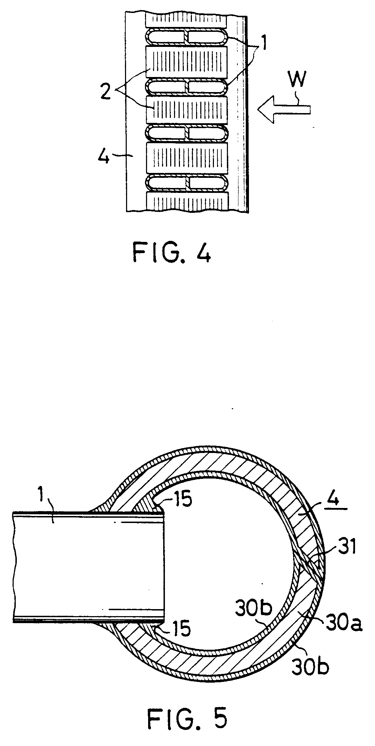

The headers 3, 4 are cylindrical having apertures 13 for allowing the insertion of the tubes 1. As shown in Fig. 5, the tubes 1 are insertedly brazed in the apertures 13. The reference numeral 15 denotes fillets. As shown in Fig. 2, the left-hand header 3 is connected to an inlet 5 through which a cooling medium is taken in, and the right-hand header 4 is connected to an outlet 6 through which the used cooling medium is discharged outside. The headers 3, 4 are covered with caps 7, and 8, respectively. The inner space of the header 3 is equally divided into two sections by a partition 9. The inner space of the header 4 is unequally divided into two sections by a partition 10 disposed below the center of the header 4. A cooling medium is introduced into the header 3 through the inlet 5, and is discharged through the outlet 6. While the cooling medium flows from the inlet 5 to the outlet 6, heat exchanges between the cooling medium and air passing through the corrugated fins 2. The air is introduced through the corrugated fins 2 in the direction (W) in Fig. 4. In this way the air condenses. The used cooling medium is discharged through the outlet 6. The reference numerals 11 and 12 denote side plates fixed to the outermost fins 2.

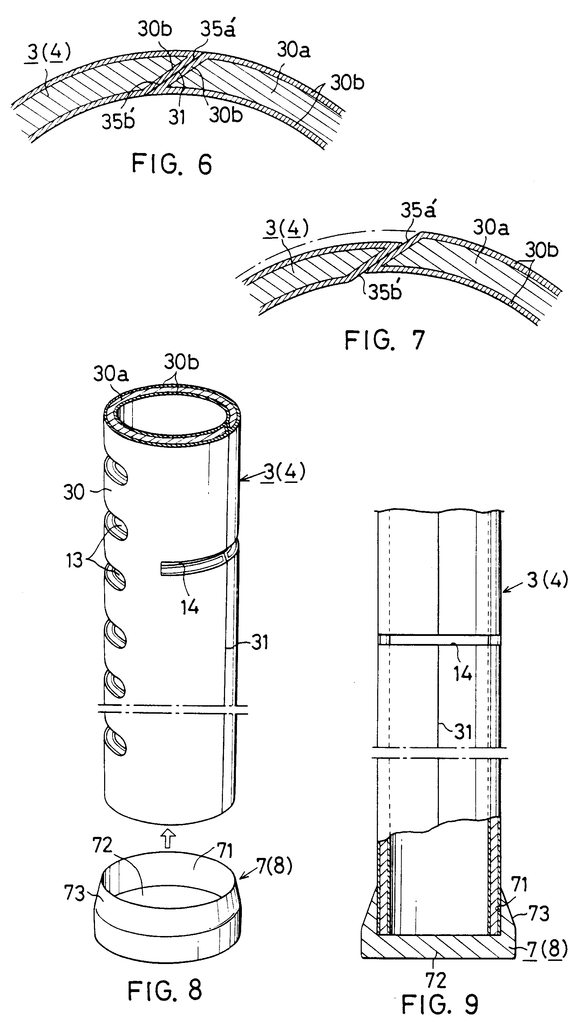

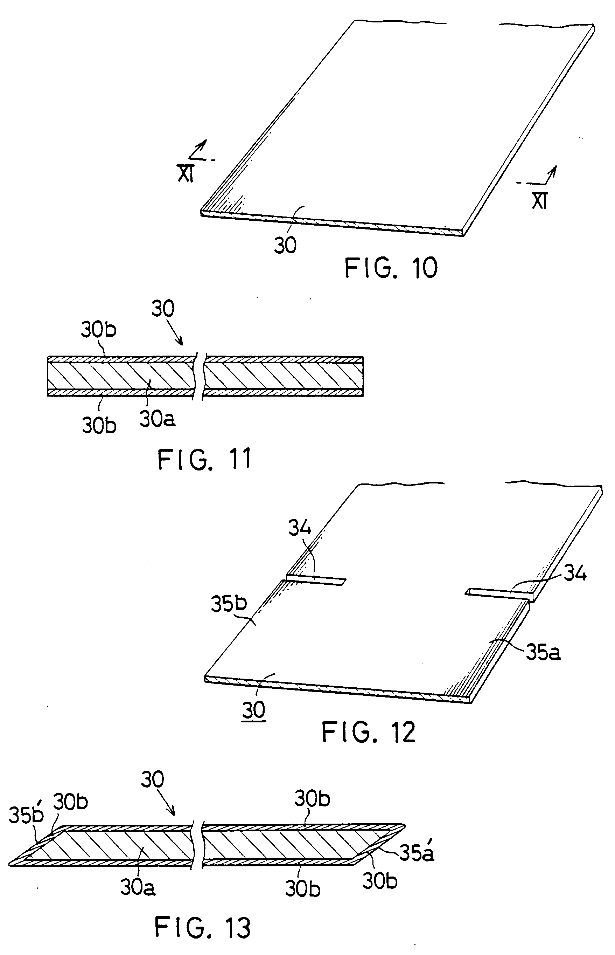

Referring to Figs. 1 and 8, each header 3, 4 is made of an aluminum brazing sheet 30 which consists of a core sheet 30a covered with a layer 30b of brazing substance. As shown in Fig. 13, each end of the brazing sheet 30 is slanted at 35a′, 35b′ which are also covered with the brazing layer 30b. The brazing sheet 30 is rolled into a cylinder and its butting slanted ends 35a′ and 35b′ are joined and brazed to each other. The brazing substance melts in a seam 31, thereby effecting the union of the two portions of the core sheet 30a. The slanted ends 35a′, 35b′ are advantageous in that if the jointed ends tend to dislocate owing to the heat generated by brazing, the end faces slip without separating from each other as shown in Fig. 7. The ends of the sheet 30 are slanted in the known manner such as by hammering or pressing.

A process of making the headers 3, 4 will be described:
The brazing sheet 30 of a suitable size is prepared in the manner described above, which includes the core sheet 30a and the coating layer 30b. The brazing substance can be an aluminum-base silicon containing about 6.0% to 13%wt Si.

Subsequently, the brazing sheet 30 is provided with slits 34 at opposite sides. The opposite slits 34 are joined into one slit 14 when the brazing sheet 30 is rolled into the headers 3, 4 as shown in Fig. 8. The slits 14 receive the partitions 9 and 10.

The next step is to shape the slanted ends 35a′, 35b′. As described above, the ends of the brazing sheet are hammered or pressed so that the body of the sheet is displaced in one direction as shown in Fig. 13.

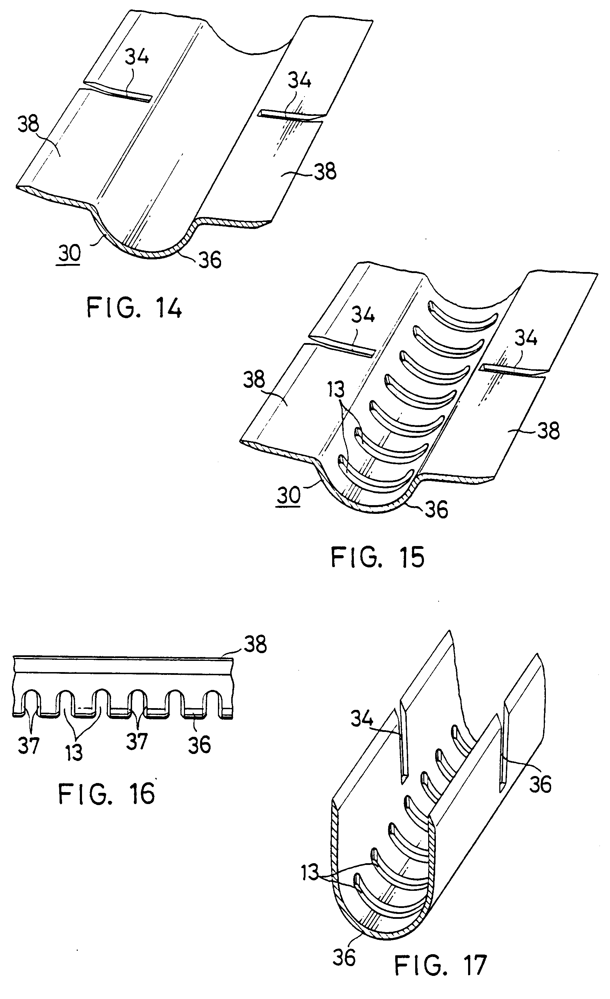

At the next stage the central portion of the brazing sheet 30 is lengthwise pressed so as to give a bulged portion 36 as shown in Fig. 14. In this way the brazing sheet 30 has the bulged portion 36 and two horizontal portions 38 shaped like wings, hereinafter referred to as wing portion. The bulged portion 36 is provided with a plurality of apertures 13 produced crosswise for insertion of the tubes 1. The apertures 13 are produced by means of a punching die and mold or any other known tool. Crushing and deformation must be avoided to keep precise dimensions of the apertures 13.

Preferably, each apertures 13 is chamfered so as to allow the smooth insertion of the tube 1. In Fig. 16 the reference numeral 37 denotes chamfered edges.

When necessary, the surface of the brazing sheet 30 is flattened. Then the wing portions 38 are straightened as shown in Fig. 17 until the whole configuration has a U-shape cross-section. Finally the U-shape brazing sheet 30 is rolled into a cylinder in which the butting slanted ends 35a′, 35b′ are brought in abutment complementarily to the thickness of the brazing sheet 30 shown in Fig. 6.

The top and bottom ends of each header 3 and 4 are covered with the caps 7 and 8, respectively, as shown in Figs. 8 and 9. As best shown in Fig. 9, each cap 7 and 8 has an erected rim 71 which keeps liquidtight contact with the outside of the headers 3, 4. The caps 7 and 8 are used not only as covers but also as reinforcements for maintaining the diameters of the headers 3, 4 if they are likely to become deformed owing to any external force or heat transmitted when the brazing is initiated. If the headers 3, 4 elongates owing to the heat, the seam 31 between the butting ends 35a' and 35b' is in danger of separation. However, the caps 7, 8 prevent the headers from elongating beyond its diameter. In addition, the caps 7 and 8 protect the headers 3, 4 against a possible breakage due to a built-up of internal pressure occurring in the condenser. The internal pressure is likely to concentrate on the end portions of the headers 3, 4, but the caps 7 and 8 protect the headers 3, 4 from being deformed. Each cap 7, 8 has a thick bottom 72 to reinforce the bottom, and a tapered side wall 73 whose thickness progressively diminishes toward its top end so as to have no step between the outside wall of the header 3, 4 and the cap 7, 8, thereby enhancing the appearance of the heat exchanger.

Preferably, the fins 2 are also made of brazing sheets, that is, a core sheet coated surface with a brazing substance, so that the fins 2 can be joined to the tubes 1 at one process, which will be described below.

In fabricating a condenser, the tubes 1 are inserted in the slits 13 of the headers 3, 4, and the partitions 9, 10 are inserted in the slits 14. Then the corrugated fins 2 are placed between one tube and the next, and the side places 11, 12 are fixed to the respective outermost fins. In this way the tubes, the headers, the fins, and the side plates are provisionally assembled. Then the mass brazing is initiated by placing the provisional assembly in a furnace to effect the permanent joint between them at one time.

The open ends of the headers 3, 4 are covered with the caps 7, 8. The seams 31 of the headers 3, 4 are made liquidtight by fillets 15.

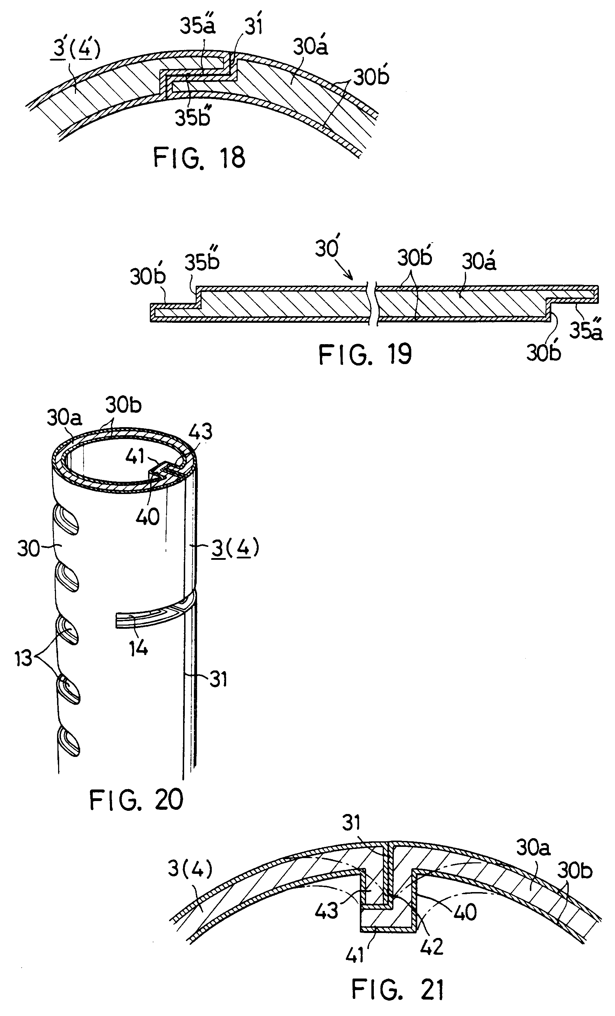

In the above-mentioned embodiment the brazing sheet 30 has slanted ends 35a′, 35b′. Alternatively the brazing sheet can have step ends 35a˝ and 35b˝ as shown in Fig. 19. The stepped ends 35a˝ and 35b˝ of the sheet 30′ are butted to each other so as to be complementary to the thickness of the brazing sheet 30′ as shown in Fig. 18. The stepped ends 35a˝ and 35b˝ can be formed in the known manner such as by a press or a hammer. In Figs. 18 and 19 the reference numerals 30a′, 30b′ and 31′ denote a core sheet such as aluminum sheet, a brazing substance layer, and a seam, respectively.

Figs. 21 and 22 show a further modification of the brazing sheet, characterized in that one end 43 of the brazing sheet is bent in the form of a hook and the other end is bent in the form of letter L, which consists of a first leg 40 and a second leg 41. The first leg 40 and the second leg 41 form a step 42, which allows the other end 43 to rest on. The two bent ends are butted and joined in a complementary manner as shown in Fig. 21. The advantage of these end configurations is that if the header 3, 4 softens and elongates owing to heat involved in brazing as shown by chain lines in Fig. 21, the first leg 40 and the portion 43 elongate together with maintaining the seam 31. In Figs. 20 and 21 the reference numerals 30a˝, 30b˝, 13˝, and 14˝ denote a core sheet, brazing substance layer, slits for insertion of the tubes, and the partitions 9 and 10.

In the illustrated embodiment the headers 3, 4 are coated with a brazing substance on both surfaces, but they can be coated on one surface.

## Claims

1. A method of manufacturing an aluminum condenser for use in air-conditioners comprising assembling a plurality of flat aluminum tubes (1) parallel to each other, a plurality of aluminum fin members (2) interspersed between each two adjacent aluminum tubes (1), a pair of aluminum headers (3, 4) to which each tube is to be fluid-tightly connected at both ends, characterized in that each header is formed into the shape of a pipe from a brazing sheet (30) composed of a core sheet (30a) and a brazing agent layer (30b) coated on at least the outer surface of the core sheet and having side portions extending longitudinally and being abutment-bondable to each other and aluminum caps (7 or 8) having upright wall portions (71) are disposed in close contact with the outer surface of each header pipe (3 or 4) on the ends thereof and, when fully assembled, the components are simultaneously brazed together to form the condenser.

2. A method according to claim 1, characterized in that longitudinally extending side portions are formed to have corresponding slanted or stepped shapes which are tightly abutted to each other.

3. A method according to claim 2, characterized in that the slanted or stepped side portions are each coated with a brazing layer so as to be brazed to each other.

4. A method according to claim 1, characterized in that one of the longitudinally extending side portions of each header pipe is formed to have a bent portion and re-bent portion extending therefrom to form a stepped region and the other side portion is formed with a bent portion which is bent up in such a direction as engaging with the stepped region inside the header pipe.

5. A method according to claim 1, characterized in that each cap has a bottom thinner than the upright wall portion.

## Patentansprüche

1. Verfahren zur Herstellung eines Aluminiumkondensators zur Verwendung bei Klimaanlagen, das den Zusammenbau einer Vielzahl von flachen Aluminiumrohren (1), die parallel zu einander sind, einer Vielzahl von Aluminiumrippenelementen (2), die zwischen jeweils zwei benachbarten Aluminiumrohren (1) verteilt sind, eines Paars Aluminiumverteiler (3, 4) umfaßt, an denen jedes Rohr an beiden Enden flüssigkeitsdicht zu verbinden ist, dadurch gekennzeichnet, daß jeder Verteiler zu der Form eines Rohrs aus einem Lötblech (30) geformt wird, das aus einem Kernblech (30a) und einer Lötmittelschicht (30b) besteht, die auf mindestens der Außenoberfläche des Kernblechs aufgebracht ist, wobei Seitenbereiche sich in Längsrichtung erstrecken und miteinander stoßverbindbar sind und Aluminiumkappen (7, 8) mit aufrechten Wandbereichen (71) in engem Kontakt mit der Außenoberfläche jedes Verteilerrohrs (3, 4) an deren Enden angeordnet sind und die Bauteile, wenn sie vollständig zusammengebaut sind, gleichzeitig zur Bildung des Kondensators untereinander hartverlötet werden.

2. Verfahren nach Anspruch 1, dadurch gekennzeichnet, daß sich in Längsrichtung erstreckende Seitenbereiche gebildet werden, um entsprechende schräge oder abgestufte Formen haben, die eng aneinander gestoßen werden.

3. Verfahren nach Anspruch 2, dadurch gekennzeichnet, daß die schrägen oder abgestuften Seitenbereiche jeweils mit einer Hartlötschicht überzogen werden, um untereinander hartverlötet zu werden.

4. Verfahren nach Anspruch 1, dadurch gekennzeichnet, daß einer der sich in Längsrichtung erstreckenden Seitenbereiche jedes Verteilerrohrs ausgebildet ist, um einen gebogenen Bereich und einen zurückgebogenen Bereich aufzuweisen, der sich davon zur Bildung eines abgestuften Bereichs erstreckt und der andere Seitenbereich mit einem gebogenen Bereich ausgebildet ist, der nach oben in solch einer Richtung gebogen ist, um den abgestuften Bereich innerhalb des Verteilerrohrs zu erfassen.

5. Verfahren nach Anspruch 1, dadurch gekennzeichnet, daß jede Kappe einen Boden aufweist, der dünner ist als der aufrechte Wandbereich.

## Revendications

1. Un procédé de fabrication de condenseurs en aluminium destinés à être utilisés dans les dispositifs de conditionnement d'air, comprenant l'assemblage d'une pluralité de tubes plats (1) en aluminium parallèles entre eux, d'une pluralité d'éléments d'ailette (2) en aluminium interposés entre chaque fois deux tubes (1) en aluminium adjacents, d'une paire de collecteurs (3, 4) en aluminium auxquels doit être connecté chaque tube, aux deux extrémités, de manière étanche aux fluides, caractérisé en ce que chaque collecteur est formé en forme de tube à partir d'une tôle brasable (30) composée d'une tôle de noyau (30a) et d'une couche de brasure (30b) revêtue sur au moins la surface extérieure de la tôle de noyau et présentant des parties latérales s'étendant longitudinalement et pouvant être assemblées en bout l'une à l'autre et que des capuchons (7 ou 8) en aluminium présentant des parties de paroi verticales (71) sont disposés en contact étroit avec la surface extérieure de chaque tube de collecteur (3 ou 4), aux extrémités de celui-ci, et en ce que les éléments, lorsqu'ils sont complètement assemblés, sont simultanément brasés l'un à l'autre pour former le condenseur.

2. Un procédé suivant la revendication 1, caractérisé en ce que les parties latérales s'étendant longitudinalement sont formées de manière à présenter des formes obliques ou en escalier correspondantes qui sont placées, de manière étanche, bout à bout l'une contre l'autre.

3. Un procédé suivant la revendication 2, caractérisé en ce que les parties latérales obliques ou en escalier sont revêtues, chacune, d'une couche brasable, de manière à être brasées l'une à l'autre.

4. Un procédé suivant la revendication 1, caractérisé en ce que l'une des parties latérales s'étendant longitudinalement de chaque tube de collecteur est formée de manière à présenter une partie courbée et une partie recourbée s'étendant à partir de cette dernière, de manière à former une zone en escalier et que l'autre partie latérale est formée avec une partie courbée qui est courbée dans une direction telle qu'elle vient en prise avec la zone en escalier à l'intérieur du tube de collecteur.

5. Un procédé suivant la revendication 1, caractérisé en ce que chaque capuchon présente un fond plus mince que la partie de paroi verticale.
